# EUROPÄISCHE PATENTSCHRIFT

(11) **EP 0 538 967 B1**
(45) Veröffentlichungstag und Bekanntmachung des Hinweises auf die Patenterteilung: **21.08.1996**
(21) Anmeldenummer: 92250248.9
(22) Anmeldetag: 08.09.1992
(51) Int. Cl.: B60L 3/10

(54) **Anordnung zur Fahr- und Bremsregelung von Fahrzeugen, die mit mehreren Einzelrad-Antriebs- und Bremsmodulen ausgerüstet sind**
apparatus for drive and brake control of vehicles, equipped with a plurality of single wheel drive and brake modules
Dispositif de régulation d'entraînement et de freinage pour véhicules équipés de plusieurs modules à roue motrice unique et à freinage

(30) Priorität: 25.10.1991 DE 4135691
(43) Veröffentlichungstag der Anmeldung: 28.04.1993
(73) Patentinhaber: AEG Westinghouse Transport-Systeme GmbH, D-13599 Berlin (DE)
(72) Erfinder: Körber, Joachim, Dipl.-Ing., W-6940 Weinheim (DE); Niemann, Klaus, Dr.-Ing., W-7063 Welzheim (DE); Frederich, Fritz, Prof. Dr.-Ing., W-4150 Krefeld (DE); Günther, Christian, Dr., W-8013 Haar (DE)
(74) Vertreter: Hamilton, Eberhard

(56) Entgegenhaltungen:
- EP-A- 0 080 139
- CH-A- 671 377
- NAHVERKEHRS-PRAXIS, Nr. 5, 1991, Seiten 171-173; W. VOELKENING : "Die neue VÖV-Niederflur-Stadtbahn"
- PATENT ABSTRACTS OF JAPAN vol. 8, no. 263 (M-342) 4. Dezember 1984; & JP-A-59 136 004
- PATENT ABSTRACTS OF JAPAN vol. 7, no. 1 (M-183)(1146) 6. Januar 1983; & JP-A-57 162 903

## Beschreibung

Die Erfindung betrifft eine Anordnung zur Fahr- und Bremsregelung von Fahrzeugen, wie sie im Oberbegriff des Anspruches 1 näher definiert ist. Es wird dabei von Einzelradantrieben ausgegangen, die in die Führungsfunktion der Räder eingreifen können, wobei die einzelnen Module auf Fahrzeugebene regelungstechnisch miteinander verkoppelt sind und Mittel vorgesehen sind, den Kopplungsgrad zu ändern.

Durch die CH-PS 671377 A5 ist bereits eine solche Anordnung bekanntgeworden. Die Fahrzeuge sind dort mit Einzelradantrieben ausgestattet, wobei sich die Räder motorgetriebener Losradsätze an Halbachsen drehen und schlupfgeregelt über eine Mikroprozessorsteuerung betrieben werden. Im losen Betrieb sind die Halbachsen jedes Radsatzes unabhängig voneinander und im Verbundvertrieb (als Paar gesehen) elektrisch starr gekuppelt. Bei Kurvenfahrten werden die kurveninneren Antriebsmotore mit Wechselstrom niedrigerer Frequenz versorgt als die kurvenäußeren Antriebsmotore. Die Einzelradantriebe greifen dabei modul-äquivalent in die Führungsfunktion der Räder mit ein bzw. beeinflussen diese.

Ansonsten wurden bislang die Antriebs- und Bremssysteme meistens entweder zentral im Einzelfahrzeug untergebracht, von wo sie auf Radsätze über zugeordnete Antriebs- und Bremseinheiten wirkten oder die Anordnung erfolgte ausschließlich in speziellen Triebfahrzeugen, wie Lokomotiven oder Triebköpfen. Gestaltung und Einsatzbereich der Fahrzeuge war damit weitgehend abhängig vom verwendeten Antriebs- und Bremskonzept.

Bei Einzelradantrieben erlaubt der Wegfall der die Räder sonst verbindenden Achsen eine Absenkung der Fahrzeuge auf ein Minimum und führt zu neuen Möglichkeiten der Gestaltung der Fahrzeugpassagierbereiche. Die Verwendung von Einzelradantrieben mit integrierten Bremseinheiten, wie sie z.B. aus "Nahverkehrspraxis", Nr. 5/1991, S. 171 bis 173, bekannt wurde, bietet durch die kompakte Bauweise weitere Möglichkeiten zur Verbesserung der Fahrzeuggestaltung. Solche **E**inzelrad-**A**ntriebs- und **B**remseinheiten werden auch als **EAB**-Module bezeichnet. Sie haben allerdings die Eigenschaft, daß die Antriebs- und Bremsfunktion mittelbar oder unmittelbar Einfluß auf die Führfunktion des Rades nimmt. Das erfordert ein abgestimmtes Verhalten.

Die heutigen derartigen bekannten Systeme weisen nur mechanische und/oder elektrische Leistungskopplung auf. Damit kann eine z.T. negative Beeinflussung des Führungsverhaltens des Rades nicht ausgeschlossen werden.

Am Rande erwähnenswert ist noch die japanische Patentanmeldung JP-A-57-162 903 (Patent Abstracts of Japan), aus der z.B. eine Regeleinrichtung für Triebwagen bekannt wurde, bei der Starrachsen über elektrisch gekoppelte Regelkreise im Sinne einer Minimierung der Radumfangskräfte so geregelt werden, daß kein Gleiten eintreten kann. Es handelt sich dort um eine bloße Gleitschutzregelung.

Ähnliches gilt auch für die EP 0 080 139 A1, in der ein Verfahren zur Steuerung oder Regelung der Achsdrehmomente eines Fahrzeuges, insbesondere Schienenfahrzeuges, abhängig von den Raddurchmessern beschrieben wird. Auch dort geht es um bloße beste Haftwertausnutzung, d.h. um Schlupf- bzw. Gleitschutz starr gekuppelter Radsätze durch spezielle Regelung unter Erfassung unterschiedlicher Radreifendurchmesser.

Vom nächstkommenden Stand der Technik für Einzelradantriebe aus besteht die Aufgabe darin, eine verbesserte Anordnung für Fahrzeuge mit Einzelrad-Antriebs- und Bremsmoduln zu entwickeln, mit der neben optimaler Ausnutzung des Kraftschlusses sowie Vermeidung von Slip-/Stick-Effekten insbesondere nicht nur negative Auswirkungen auf die Führungseigenschaften der Räder ausgeschlossen, sondern darüberhinaus diese EAB-Module aktiv führungsunterstützend wirksam gemacht werden können.

Diese Aufgabe wird gemäß den kennzeichnenden Merkmalen des Anspruches 1 gelöst. Vorteilhafte Alternativen und Ausgestaltungen sind den weiteren Ansprüchen entnehmbar.

Anhand von schematischen Ausführungsbeispielen wird die Erfindung im nachstehenden näher erläutert.

Es zeigen in Blockbilddarstellung:
- Fig. 1: eine Anordnung zur Momentenregelung eines EAB-Modulpaares,
- Fig. 2, 3, 4: verschiedene Schlupfregelungskonzepte für EAB-Modulpaare.

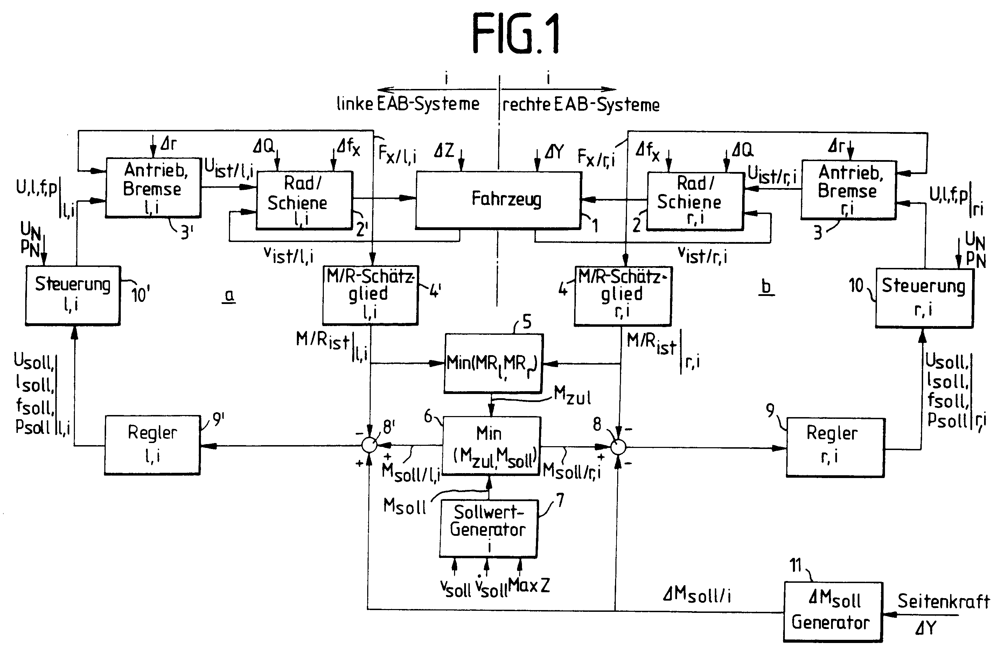

In Fig. 1 ist ein Fahrzeug 1 für den Einsatzfall Rad/Schiene mit einem von mehreren EAB-Modulpaaren i dargestellt. Zu jedem Modulpaar gehören ein linkes (2') und ein rechte Rad 2, sowie ein zugeordnetes Antriebs- und Bremssystem 3', 3 wobei für die Momentenregelung ermitteln getrennte Schätzglieder 4',4 die tatsächwirkenden Umfangkräfte M/Rᵢₛₜ am linken (2') und rechten Rad 2 ermitteln. Der Minimalwert Min (MRᵢₛₜ) wird in einer ersten Minimalwertstufe 5 gebildet und unter Berücksichtigung der Raddurchmesser als zulässiges Moment M_{zul} herausgegeben. In einer zweiten Minimalwertstufe 6 wird aus dem zulässigen Moment M_{zul} und einem Momentensollwert Mₛₒₗₗ, der in einem Sollwertgenerator 7 aus einer vorgegebenen Geschwindigkeit vₛₒₗₗ, einer vorgegebenen Beschleunigung vₛₒₗₗ bzw. der vorgegebenen Zugkraft Max Z erzeugt wurde, ein Minimalwert für Mₛₒₗₗ gebildet.

Dieser Wert Mₛₒₗₗ wird gleichermaßen Vergleichsstufen 8',8 für den linken und rechten Regelkreis (a,b) der Momentregelung für die EAB-Module zugeführt. Die an den Vergleichsstufen 8',8 entstehenden Regeldifferenzen aus den geschätzten Momenten-Istwerten der Schätzglieder 4',4 und dem Minimalwert Mₛₒₗₗ wird den Reglern 9',9 der getrennten Regelkreise (a,b) zugeführt, die über Stellglieder 10',10 die Antriebs- und Bremssysteme 3',3 beeinflussen. Die Regelsysteme führen die rechten und linken EAB-Modulederart, daß alle auf exakt das gleiche Minimummoment geregelt werden (elektrisches Differential). Damit ergeben sich keine Störungen mehr in der Führungsfunktion der EAB-Modulpaare. Die Antriebs- und Bremssysteme funktionieren innerhalb der Gleitgrenze. Damit jedoch auf von außen wirkende Seitenkräfte ΔY*) reagiert werden kann, werden durch einen Sollwertgenerator 11 zusätzlich entsprechende Momente ΔMₛₒₗₗ vorgegeben und mit geeigneten umgekehrten Vorzeichen auf die Vergleichsstufen 8',8 geführt. Das ergibt eine kontrollierte Momentendifferenz rechts gegen links und führt zu einer kontrollierten Quergleitung der beiden EAB-Module bzw. Räder. Es werden in den Berührungspunkten Rad/Fahrweg Querkräfte erzeugt, die gegen die von außen wirkenden Seitenkräfte ΔY gerichtet sind. Damit sind die EAB-Module in der Lage, innerhalb vorgegebener Spurabweichungen auch auf äußere Querkräfte zu reagieren und erfüllen damit Führungsaufgaben.
Der Grad der Kopplung der geregelten EAB-Module ist über die Schätzglieder 4',4 und die Regler 9', 9 einstellbar und kann den verschiedenen Einsatzanforderungen angepaßt werden.
*) (Trassierungs- und aerodynamische Kräfte)

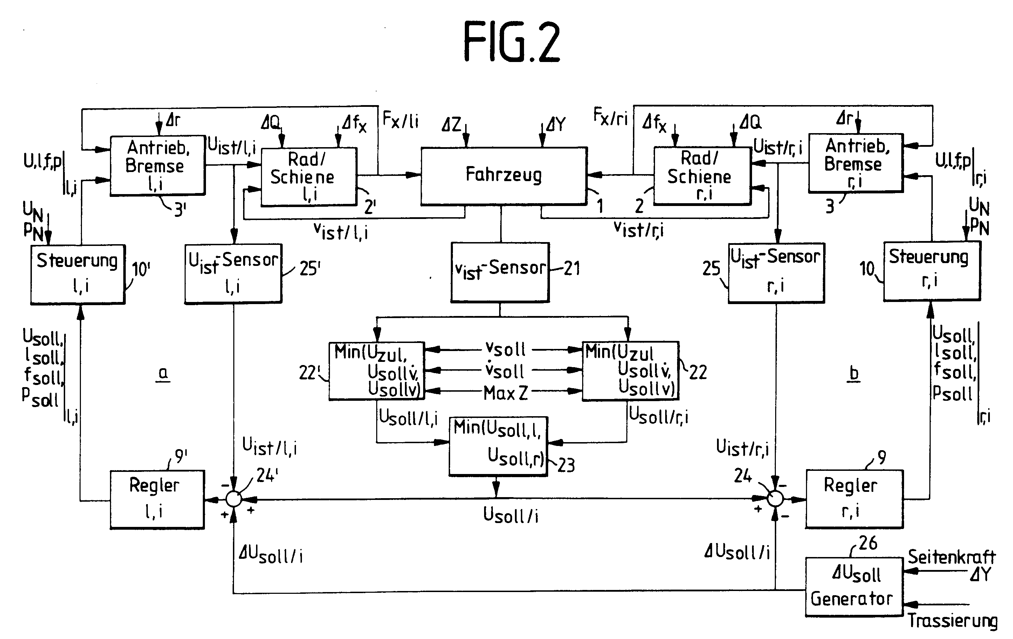

Fig. 2 zeigt eine regelungstechnische Verkopplung der beiden EAB-Systeme bei einer Schlupfregelung, bei der die Umfangsgeschwindigkeiten des linken (2') und rechten Rades 2 geregelt werden. Die Bezugszeichen sind - soweit sachlich vertretbar - gegenüber Fig. 1 unverändert geblieben.
Danach werden aus der von einem einzelnen Geschwindigkeitssensor 21 ermittelten Istgeschwindigkeit vᵢₛₜ des Fahrzeuges 1 mittels der Rechner 22' (für Regelkreis a) bzw. 22 (für Regelkreis b)-unter Zuhilfenahme von z.B. von einem Zugverband vorgegebenen Größen, wie Geschwindigkeit vₛₒₗₗ, Beschleunigung vₛₒₗₗ sowie maximale Zugkraft Max Z-getrennt die Radumfangsgeschwindigkeiten Uₛₒₗₗ für beide Regelungssysteme a und b ermittelt, die auf beiden Seiten die Gleitgrenze nicht überschreiten.

Das Minimum der beiden Werte wird über Minimalwertbildner 23 ermittelt und ist dann der Sollwert für die Radumfangsgeschwindigkeit, der beiden EAB-Systemen als gleicher Sollwert Uₛₒₗₗ vorgegeben wird. Uₛₒₗₗ wird mit den durch weitere Sensoren 25' und 25 gemessenen Istwerten der Radumfangsgeschwindigkeit Uᵢₛₜ in Vergleichsstufen 24',24 verglichen. Das dadurch erzeugte Differenzsignal wird dann in Reglern 9',9 verarbeitet und in Ansteuerungssignale umgewandelt, die die Radumfangsgeschwindigkeit so beeinflussen, daß die zur Erzeugung der Vortriebs- oder Bremskräfte notwendigen Mikrogleitdifferenzen genau eingehalten werden.

Trassierungs- und/oder aerodynamisch verursachte Seitenkräfte ΔY werden - wie bereits zu Fig. 1 ähnlich geschildert - in einem speziellen Generator 26 zu einem zusätzlich vorgegebenen Umfangsgeschwindigkeitssollwert ΔUₛₒₗₗ umgewandelt, der mit entgegengesetzten Vorzeichen dem rechten und linken EAB-System zugeführt wird. Damit wird eine kontrollierte Umfangsgeschwindigkeitsdifferenz zwischen rechtem und linkem EAB-Modul eingeführt, was ein Moment um die Hochachse des Fahrzeugs ergibt und Quergleitungen in den Rad/Fahrweg-Aufstandspunkten so erzeugt, daß die äußeren Querkräfte neutralisiert werden.

Die regeltechnische Kopplung erfolgt hier über die Rechner 22',22 und die Regler 9', 9.

Der Kopplungsgrad ist softwaremäßig anpaßbar.

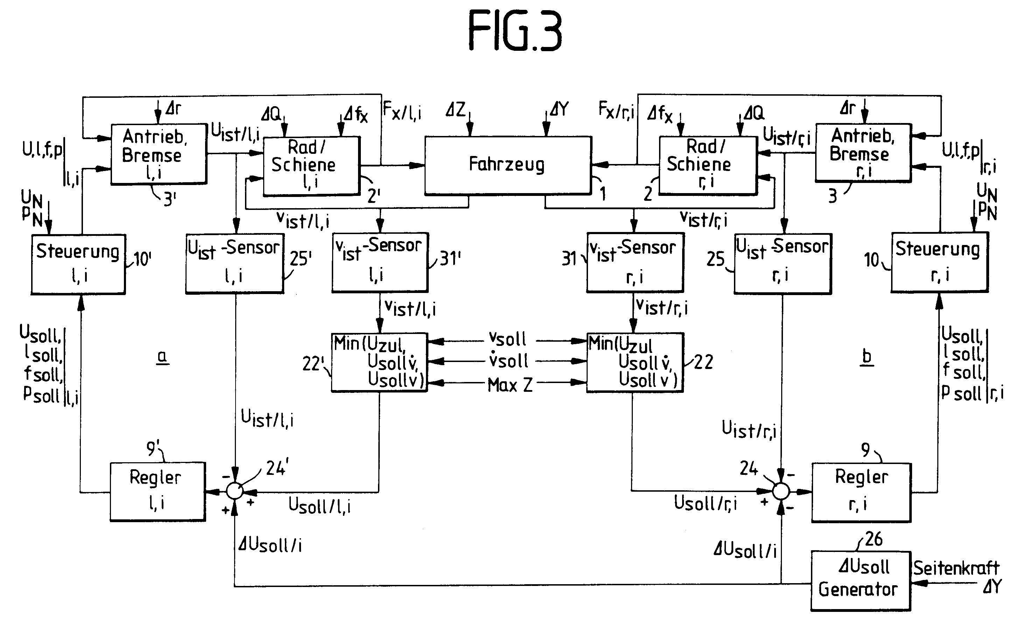

Fig. 3 zeigt eine Variante der Schlupfregelung nach Fig. 2. Hierbei werden die Umfangsgeschwindigkeitssollwerte Uₛₒₗₗ getrennt für die linken und rechten EAB-Systeme über Rechner 22', 22 ermittelt.Um die Gleitgrenzen nicht zu überschreiten wird, bei Nutzung vorgegebener Werte z.B. bei einem Zugverband - wie Geschwindigkeit Vₛₒₗₗ, Beschleunigung Vₛₒₗₗ und/oder maximale Zugkraft max Z, für die linke und rechte Seite eine getrennte Minimalwertbestimmung durchgeführt. Jeweils eigene Sensoren 31, 31' werden für die genaue Ermittlung der Geschwindigkeit des Fahrzeuges 1 über Grund links und rechts verwendet (z.B. über linke und rechte Laufräder). Im übrigen ist das Blockschaltbild dem von Fig. 2 entsprechend aufgebaut mit entsprechenden Bezugszeichen.

Damit ist es für eine Reaktion auf die äußeren Seitenkräfte nur notwendig, die durch die Aerodynamik erzeugten Kräfte in einen zusätzlichen Radum-fangsgeschwindigkeitssollwert umzuwandeln. Das geschieht durch Generierung und Aufschaltung eines entsprechend zusätzlichen Radumfangsgeschwindigkeitssollwertes ΔUₛₒₗₗ (vgl. hierzu auch Fig. 1 oder 2).

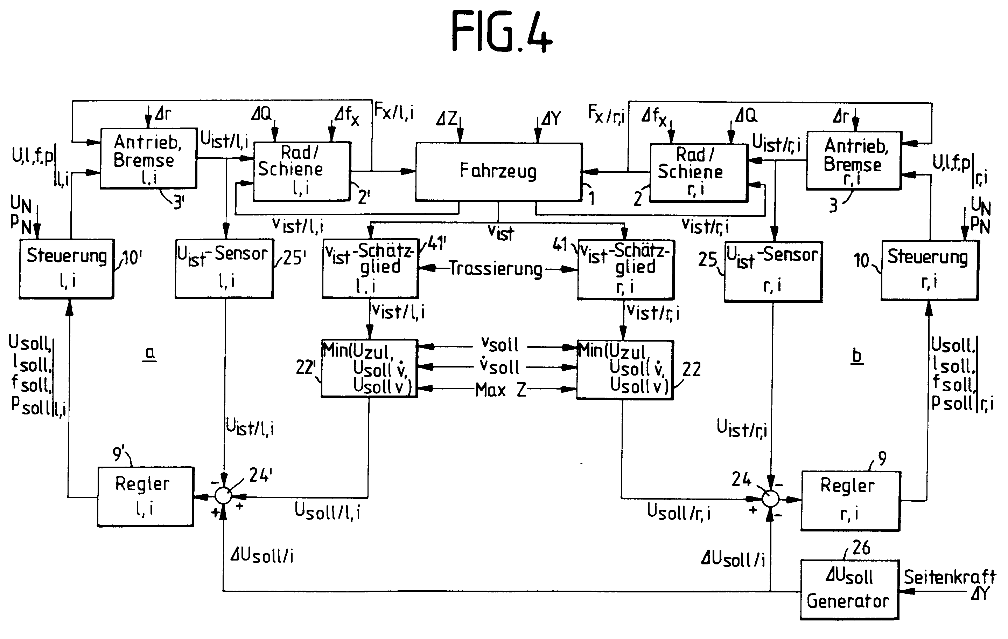

Fig. 4 zeigt eine weitere Variante der Schlupfregelung, bei der statt der Istgeschwindigkeitssensoren (31',31 nach Fig. 3) jetzt Schätzglieder 41',41 für die Ermittlung der Fahrgeschwindigkeit über Grund für die linken und rechten EAB-Systeme Verwendung finden, die unter Berücksichtigung der Trassierungseinflüsse aus der bekannten Fahrgeschwindigkeit des Fahrzeuges die relevanten Werte für das rechte bzw. das linke EAB-System ermitteln. Die weitere Funktionsweise ist die des Systems gemäß Fig. 3.

Durch die Erfindung können durch leichte Modifizierbarkeit der Anordnung und geringste Anforderungen an den Freiraum die Fahrzeuge optimal nach Passagiergesichtspunkten gestaltet werden. Dabei können baugleiche EAB-Module für Bahnfahrzeuge und Busse Verwendung finden. Die Einsatzflexibilität der Fahrzeuge hinsichtlich Einsatzgeschwindigkeit oder installierte Leistung ist durch die Möglichkeit der regeltechnischen Verkopplung der EAB-Module (insbesondere durch Softwareänderung) erreicht.

## Patentansprüche

1. Anordnung zur Fahr- und Bremsregelung von Fahrzeugen, die mit mehreren **E**inzelrad-**A**ntriebs-und **B**remsmoduln ausgerüstet sind, die in die Führungsfunktion der Räder eingreifen, wobei die einzelnen **EAB-**Module auf Fahrzeugebene regelungstechnisch miteinander verkoppelt sind und Mittel vorgesehen sind, den Kopplungsgrad zu ändern,
**dadurch gekennzeichnet,**
- daß von den EAB-Moduln die den links- und rechtsseitig jeweils gegenüberliegenden Rädern des Fahrzeuges (1) zugeordneten Einzelmodule jeweils Paare bilden, wobei jedes Modul eines Paares einen eigenen Drehmomentregelkreis (a bzw b) aufweist,
- daß Schätzglieder (4'bzw.4) zur Ermittlung der jeweiligen Drehmomenten-Istwerte (M/Rᵢₛₜ) aus den Umfangskräften an den beiden Rädern (2',2) vorgesehen sind und die Kopplung beider Modulregelkreise über eine erste Minimalwertstufe (5) und eine zweite nachgeschaltete Minimalwertstufe (6) erfolgt,
- wobei die erste Minimalwertstufe (5) einen Minimalwert aus den beiden Drehmoment-Istwerten (M/Rᵢₛₜ) bildet und diesen als zulässigen Drehmomentenwert (M_{zul}) ausgibt
- und die zweite Minimalwertstufe (6) aus diesem zulässigen Drehmomentenwert (M_{zul}) und einem von einem Sollwertgenerator (7) auf der Grundlage vorgegebener Größen wie Fahrzeuggeschwindigkeit, Fahrzeugbeschleunigung und maximaler Zugkraft erzeugten Drehmomenten-Sollwert (Mₛₒₗₗ) einen Minimalwert dieser beiden Momente bildet,
- und daß dieser Minimalwert dann über Vergleichsstufen (8',8), an denen außer den jeweiligen Drehmoment-Istwerten (M/Rᵢₛₜ) noch zusätzlich Momentensollwerte (Δ Mₛₒₗₗ)eines Sollwertgenerators (11) zum Ausgleich von Seitenkräften ( Δ Y) anliegen, mit unterschiedlichen Vorzeichen den beiden Regelkreisen (a,b) zugeführt wird.

2. Anordnung zur Fahr- und Bremsregelung von Fahrzeugen, die mit mehreren **E**inzelrad-**A**ntriebs-und **B**remsmodulen ausgerüstet sind, die in die Führungsfunktion der Räder eingreifen, wobei die einzelnen **EAB-**Module auf Fahrzeugebene regelungstechnisch miteinander verkoppelt sind und Mittel vorgesehen sind, den Kopplungsgrad zu ändern,
**dadurch gekennzeichnet,**
- daß von den EAB-Moduln die den links- und rechtsseitig jeweils gegenüberliegenden Rädern des Fahrzeuges (1) zugeordneten Einzelmodule jeweils Paare bilden, wobei jedes Modul eines Paares einen eigenen Schlupfregelkreis (a bzw b) aufweist,
- daß ein Geschwindigkeitssensor (21) zur Ermittlung der tatsächlichen Istgeschwindigkeit (Vᵢₛₜ) des Fahrzeuges (1) vorgesehen ist, wobei der Ausgang des Geschwindigkeitssensors (21) an zwei, den einzelnen Modulregelkreisen zugeordnete Rechner (22'bzw.22) angeschlossen ist, die beide zur Kopplung der Modulregelkreise jeweils auf der Grundlage vorgegebener Größen wie Fahrzeuggeschwindigkeit, Fahrzeugbeschleunigung und maximaler Zugkraft Radumfangs-Sollgeschwindigkeitswerte (Uₛₒₗₗ) erzeugen
- wobei in einer Minimalwertstufe (23) ein Minimalwert aus beiden Radumfangs-Sollgeschwindigkeitswerte (Uₛₒₗₗ) gebildet und über Vergleichsstufen (24',24) , an denen jeweils außer dem entsprechenden Radumfangs-Istgeschwindigkeitswert (Uᵢₛₜ) noch zusätzlich Radumfangs-Geschwindigkeits-Sollwerte (Δ Uₛₒₗₗ) eines Sollwertgenerators (26) zum Ausgleich von Seitenkräften (Δ Y) anliegen, mit unterschiedlichen Vorzeichen den Regelkreisen (a, b) zugeführt wird,

3. Anordnung zur Fahr- und Bremsregelung von Fahrzeugen, die mit mehreren **E**inzelrad-**A**ntriebs-und **B**remsmodulen ausgerüstet sind, die in die Führungsfunktion der Räder eingreifen, wobei die einzelnen **EAB-**Module auf Fahrzeugebene regelungstechnisch miteinander verkoppelt sind und Mittel vorgesehen sind, den Kopplungsgrad zu ändern,
**dadurch gekennzeichnet,**
- daß von den EAB-Moduln die den links- und rechtsseitig jeweils gegenüberliegenden Rädern des Fahrzeuges (1) zugeordneten Einzelmodule jeweils Paare bilden, wobei jedes Modul eines Paares einen eigenen Schlupfregelkreis (a bzw b) aufweist,
- daß zu jedem Modulregelkreis (a bzw. b) ein eigener Geschwindigkeitssensor (31'bzw 31) zur Ermittlung der tatsächlichen Istgeschwindigkeit (Vᵢₛₜ) des Fahrzeuges (1) und ein Rechner (22'bzw 22) gehört,
- daß beide Rechner (22'bzw. 22) zur Kopplung der beiden Modulregelkreise jeweils auf der Grundlage vorgegebener Größen wie Fahrzeuggeschwindigkeit, Fahrzeugbeschleunigung und maximaler Zugkraft Radumfangs-Sollgeschwindigkeiten (Uₛₒₗₗ) erzeugen,
- wobei die Uₛₒₗₗ-Werte jeweils über Vergleichsstufen (24'bzw 24), an denen außer den jeweiligen Radumfangs-Istgeschwindigkeiten (Uᵢₛₜ) noch zusätzliche Radumfangs-Geschwindigkeits-Sollwerte ( Δ Uₛₒₗₗ) eines Sollwertgenerators (26) zum Ausgleich von Seitenkräften ( Δ Y) anliegen, mit unterschiedlichen Vorzeichen den Regelkreisen (a,b) direkt zugeführt werden.

4. Anordnung zur Fahr- und Bremsregelung von Fahrzeugen, die mit mehreren **E**inzelrad-**A**ntriebs-und **B**remsmodulen ausgerüstet sind, die in die Führungsfunktion der Räder eingreifen, wobei die einzelnen **EAB-**Module auf Fahrzeugebene regelungstechnisch miteinander verkoppelt sind und Mittel vorgesehen sind, den Kopplungsgrad zu ändern,
**dadurch gekennzeichnet,**
- daß von den EAB-Moduln die den links- und rechtsseitig jeweils gegenüberliegenden Rädern des Fahrzeuges (1) zugeordneten Einzelmodule jeweils Paare bilden, wobei jedes Modul eines Paares einen eigenen Drehmomentregelkreis (a bzw b) aufweist,
- daß den Regelkreisen (a,b) getrennte Schätzglieder (41'bzw 41) für die jeweilige Fahrgeschwindigkeit über Grund (Vᵢₛₜ) mit Anschluß an eigene Rechner (22',22) zugeordnet sind,
- daß beide Rechner (22'bzw. 22) zur Kopplung beider Modul-Regelkreise jeweils auf der Grundlage vorgegebener Größen wie Fahrzeuggeschwindigkeit, Fahrzeugbeschleunigung und maximaler Zugkraft Radumfangs-Sollgeschwindigkeiten (Uₛₒₗₗ) erzeugen,
- wobei die Uₛₒₗₗ-Werte jeweils Vergleichsstufen (24'bzw 24), an denen außer der jeweiligen Radumfangs-Istgeschwindigkeit (Uᵢₛₜ) noch zusätzlich Radumfangs-Geschwindigkeits-Sollwerte (Δ Uₛₒₗₗ) eines Sollwertgenerators (26) zum Ausgleich von Seitenkräften ( Δ Y) anliegen, mit unterschiedlichen Vorzeichen den Regelweisen (a,b) direkt zugeführt werden.

5. Anordnung nach einem der vorhergehenden Ansprüche,
**dadurch gekennzeichnet,**
daß die erzeugten Zusatz-Sollwerte (Δ Mₛₒₗₗ bzw.Δ Uₛₒₗₗ) des Sollwertgenerators (11 bzw 26) mit unterschiedlichen Vorzeichen den beiden Regelkreisen (a,b) so zuführen sind, daß den Seitenkräften ( Y) entgegenwirkende Führkräfte mit Quergleitungen der Räder (2',2) in den Radaufstandspunkten entstehen.

## Claims

1. Arrangement for the driving and braking regulation of vehicles which are equipped with several single-wheel driving and braking modules which act on the control function of the wheels, wherein the individual single-wheel driving and braking modules are coupled one with the other in terms of regulation technique on the vehicle plane and means are provided for changing the degree of coupling,
characterised thereby,
- that of the single-wheel driving and braking modules, the individual modules, which are associated with those wheels of the vehicle (1), which lie one opposite the other on the left-hand and right-hand sides, form pairs each time, wherein each module of a pair comprises an individual torque-regulating loop (a or b),
- that estimating members (4' or 4) are provided for ascertaining the respective actual torque values (M/Rᵢₛₜ) from the circumferential forces at both the wheels (2', 2) and the coupling of both the module-regulating loops takes place by way of a first minimum value stage (5) and a second minimum value stage (6) connected therebehind,
- wherein the first minimum value stage (5) forms a minimum value from both the actual torque values (M/Rᵢₛₜ) and issues this as permissible torque value (M_{zul}),
- and the second minimum value stage (6) forms, from this permissible torque value (M_{zul}) and a target torque value (Mₛₒₗₗ), which is produced by a target generator (7) on the basis of preset magnitudes such as vehicle speed, vehicle acceleration and maximum traction force, a minimum value of both these torques
- and that this minimum value is then fed by way of comparison stages (8', 8), at which apart from the respective actual torque values (M/Rᵢₛₜ), still in addition, target torque values (ΔMₛₒₗₗ) of a target value generator (11) are present for the balancing of lateral forces (ΔY), with different signs to both the regulating loops (a, b).

2. Arrangement for the driving and braking regulation of vehicles which are equipped with several single-wheel driving and braking modules which act on the control function of the wheels, wherein the individual single-wheel driving and braking modules are coupled one with the other in terms of regulation technique on the vehicle plane and means are provided for changing the degree of coupling,
characterised thereby,
- that of the single-wheel driving and braking modules, the individual modules, which are associated with those wheels of the vehicle (1), which lie one opposite the other on the left-hand and right-hand sides, form pairs each time, wherein each module of a pair comprises an individual slip-regulating loop (a, b),
- that a speed sensor (21) is provided for ascertaining the actual speed (Vᵢₛₜ) of the vehicle (1), wherein the output of the speed sensor (21) is connected to two computers (22' or 22), which are associated with the individual module-regulating loops and which both produce target circumferential wheel speed values (Uₛₒₗₗ) each time on the basis of preset magnitudes such as vehicle speed, vehicle acceleration and maximum traction force, for the coupling of the module-regulating loops,
- wherein a minimum value of both actual torque values (M/Rᵢₛₜ) is formed in a minimum value stage (23) and fed by way of comparison stages (24', 24), at which apart from the corresponding actual circumferential wheel speed value (Uᵢₛₜ), still in addition target circumferential wheel speed values (ΔUₛₒₗₗ) of a target value generator (26) are present for the balancing of lateral forces (ΔY), with different signs to both the regulating loops (a, b).

3. Arrangement for the driving and braking regulation of vehicles which are equipped with several single-wheel driving and braking modules which act on the control function of the wheels, wherein the individual single-wheel driving and braking modules are coupled one with the other in terms of regulation technique on the vehicle plane and means are provided for changing the degree of coupling,
characterised thereby,
- that of the single-wheel driving and braking modules, the individual modules, which are associated with those wheels of the vehicle (1), which lie one opposite the other on the left-hand and right-hand sides, form pairs each time, wherein each module of a pair comprises an individual slip-regulating loop (a, b),
- that an individual speed sensor (31' or 31) for ascertaining the actual speed (Vᵢₛₜ) of the vehicle (1) and a computer (22' or 22) belong to each module-regulating loop (a or b),
- that both computers (22' or 22) produce target circumferential wheel speed values (Uₛₒₗₗ) each time on the basis of preset magnitudes such as vehicle speed, vehicle acceleration and maximum traction force, for the coupling of both the module-regulating loops,
- wherein the Uₛₒₗₗ values are fed directly by way of comparison stages (24', 24), at which apart from the respective actual circumferential wheel speeds (Uᵢₛₜ) still additional target circumferential wheel speed values (ΔUₛₒₗₗ) of a target value generator (26) are present for the balancing of lateral forces (ΔY), with different signs to both the regulating loops (a, b).

4. Arrangement for the driving and braking regulation of vehicles which are equipped with several single-wheel driving and braking modules which act on the control function of the wheels, wherein the individual single-wheel driving and braking modules are coupled one with the other in terms of regulation technique on the vehicle plane and means are provided for changing the degree of coupling,
characterised thereby,
- that of the single-wheel driving and braking modules, the individual modules, which are associated with those wheels of the vehicle (1), which lie one opposite the other on the left-hand and right-hand sides, form pairs each time, wherein each module of a pair comprises an individual torque-regulating loop (a or b),
- that the regulating loop (a, b) are associated with separate estimating members (41' or 41) for the respective speed of travel (Vᵢₛₜ) over the ground with connection to individual computers (22', 22),
- that both computers (22' or 22) produce target circumferential wheel speed values (Uₛₒₗₗ) each time on the basis of preset magnitudes such as vehicle speed, vehicle acceleration and maximum traction force, for the coupling of both the module-regulating loops,
- wherein the Uₛₒₗₗ values are fed directly by way of comparison stages (24', 24), at which apart from the respective actual circumferential wheel speed (Uᵢₛₜ) still additional target circumfential wheel speed values (ΔUₛₒₗₗ) of a target value generator (26) are present for the balancing of lateral forces (ΔY), with different signs to both the regulating loops (a, b).

5. Arrangement according to one of the preceding claims, characterised thereby, that the produced additional target values (ΔMₛₒₗₗ or ΔUₛₒₗₗ) of the target value generator (11 or 26) are to be so fed with different signs to both the regulating loops (a, b) that guiding forces, which counteract the lateral forces (ΔY), arise in the wheel contact points on transverse slides of the wheels (2', 2).

## Revendications

1. Agencement pour la régulation de roulement et de freinage de véhicules, qui sont équipés avec plusieurs modules pour roue individuelle, d'entraînement et de freinage, EAB, qui interviennent dans le fonctionnement de conduite des roues, les modules EAB individuels étant accouplés les uns avec les autres, selon la technique de régulation en ce qui concerne les véhicules, et des moyens étant prévus pour modifier le degré d'accouplement,
caractérisé en ce
- que des modules EAB, les modules individuels, associés chaque fois aux roues du véhicule (1), se trouvant à l'opposé au côté gauche et au côté droit, forment chaque fois des paires, chaque module d'une paire présentant un circuit de régulation de couple (a ou bien b) propre,
- que des éléments d'estimation (4' ou bien 4), pour la détermination chaque fois des valeurs actuelles de couple (M/R_{actuelle}) à partir des forces périphériques aux deux roues (2', 2'), sont prévus, et que l'accouplement des deux circuits de régulation de module a lieu par l'intermédiaire d'un premier étage de valeur minimale (5) et d'un deuxième étage de valeur minimale (6) mis en circuit en aval,
- le premier étage de valeur minimale (5) formant une valeur minimale à partir des deux valeurs actuelles de couple (M/R_{actuelle}) et émettant celle-ci comme valeur de couple (M_{adm.}),
- et le deuxième étage de valeur minimale (6), à partir de cette valeur de couple admissible (M_{adm.}) et d'une valeur d'objectif de couple (M_{obj.}), engendrée par un générateur de valeur d'objectif (7) sur la base de grandeurs préalloulées, telles que ; vitesse de véhicule, accélération de véhicule et force de traction maximale, formant une valeur minimale de ces deux moments,
- et que cette valeur minimale, alors, par l'intermédiaire d'étages de comparaison (8', 8), auxquels, en dehors chaque fois des valeurs actuelles de couple (M/R_{actuelle}), sont encore appliquées des valeurs d'objectif de moment ( Δ M_{obj.}) supplémentaires d'un générateur de valeur d'objectif (11) pour la compensation de forces latérales (Δ Y), sera amenée avec des signes de polarité différentes aux deux circuits de régulation (a, b).

2. Agencement pour la régulation de roulement et de freinage de véhicules, qui sont équipés avec plusieurs modules pour roue individuelle, d'entraînement et de freinage, EAB, qui interviennent dans le fonctionnement de conduite des roues, les modules EAB individuels étant accouplés les uns avec les autres, selon la technique de régulation en ce qui concerne les véhicules, et des moyens étant prévus pour modifier le degré d'accouplement,
caractérisé en ce
- que des modules EAB, les modules individuels, associés chaque fois aux roues du véhicule (1), se trouvant à l'opposé au côté gauche et au côté droit, forment chaque fois des paires, chaque module d'une paire présentant un circuit de régulation de glissement (a ou bien b) propre,
- qu'un capteur de vitesse (21) pour la détermination de la vitesse actuelle (V_{actuel}) du véhicule (1) effective est prévue, la sortie du capteur de vitesse (21) étant raccordée à deux calculateurs (22' ou bien 22) associés aux circuits de régulation de module individuels, qui engendrent deux valeurs de vitesse d'objectif de périphérie de roue (U_{obj.}) pour l'accouplement des circuits de régulation de module, chaque fois sur la base de grandeurs préallouées, telles que : vitesse de véhicule, accélération de véhicule et force de traction maximale,
- dans un étage de valeur minimale (23), une valeur minimale étant formée à partir des deux valeurs de vitesse d'objectif de périphérie de roue (U_{obj.}), et, par l'intermédiaire d'étages de comparaison (24', 24), auxquels, chaque fois, en dehors de la valeur de vitesse actuelle de périphérie de roue (U_{actuel}) correspondant, encore des valeurs d'objectif de vitesse de périphérie de roue ( Δ U_{obj.}) supplémentaires d'un générateur de valeur d'objectif (26) sont appliquées pour la compensation de forces latérales ( Δ Y), étant amenée avec des signes de polarité différente aux circuits de régulation (a, b).

3. Agencement pour la régulation de roulement et de freinage de véhicules, qui sont équipés avec plusieurs modules pour roue individuelle, d'entraînement et de freinage, EAB, qui interviennent dans le fonctionnement de conduite des roues, les modules EAB individuels étant accouplés les uns avec les autres, selon la technique de régulation en ce qui concerne les véhicules, et des moyens étant prévus pour modifier le degré d'accouplement,
caractérisé en ce
- que des modules EAB, les modules individuels, associés chaque fois aux roues du véhicule (1), se trouvant à l'opposé au côté gauche et au côté droit, forment chaque fois des paires, chaque module d'une paire présentant un circuit de régulation de glissement (a ou bien b) propre,
- qu'à chaque circuit de régulation de module (a ou bien b), appartiennent un capteur de vitesse (31' ou bien 31) propre pour la détermination de la vitesse actuelle (V_{actuel}) effective du véhicule (1) et un calculateur (22' ou bien 22'),
- que deux calculateurs (22' ou bien 22), pour l'accouplement des deux circuits de régulation de module, engendrent chaque fois, sur la base de grandeurs préalloulées, telles que; vitesse de véhicule, accélération de véhicule et force de traction maximale, des vitesse d'objectif de périphérie de roue (U_{obj.}),
- les valeurs U_{obj.}, chaque fois, par l'intermédiaire d'étages de comparaison (24' ou bien 24), auxquels, en dehors chaque fois des vitesses actuelles de périphéries de roue (U_{actuel}), encore des valeurs d'objectif de vitesse de périphérie de roue (Δ U_{obj.}) supplémentaires d'un générateur de valeur d'objectif (26) sont appliquées pour la compensation de forces latérales (Δ Y), étant amenées avec des signes de polarité différente directement aux circuits de régulation (a, b).

4. Agencement pour la régulation de roulement et de freinage de véhicules, qui sont équipés avec plusieurs modules pour roue individuelle, d'entraînement et de freinage, EAB, qui interviennent dans le fonctionnement de conduite des roues, les modules EAB individuels étant accouplés les uns avec les autres, selon la technique de régulation en ce qui concerne les véhicules, et des moyens étant prévus pour modifier le degré d'accouplement,
caractérisé en ce
- que des modules EAB, les modules individuels, associés chaque fois aux roues du véhicule (1), se trouvant à l'opposé au côté gauche et au côté droit, forment chaque fois des paires, chaque module d'une paire présentant un circuit de régulation de couple (a ou bien b) propre,
- qu'aux circuits de régulation (a, b), des éléments d'estimation (41' ou bien 41) séparés, pour chaque fois la vitesse de roulement au-dessus du sol (V_{actuel}), avec raccordement à des calculateurs (22', 22) propres, sont associés,
- que les deux calculateurs (22' ou bien 22), pour l'accouplement des deux circuits de régulation de module, chaque fois, sur la base de grandeurs préallouées, telles que; vitesse de véhicule, accélération de véhicule et force de traction maximale, engendrent des vitesses d'objectif de périphérie de roue (U_{obj.}),
les valeurs U_{obj.}, chaque fois, par l'intermédiaire d'étages de comparaison (24' ou bien 24), auxquels, en dehors chaque fois de la vitesse actuelle de périphérie de roue (U_{actuel}), encore des valeurs d'objectif de vitesse de périphérie de roue (Δ U_{obj.}) supplémentaires d'un générateur de valeur d'objectif (26) sont appliquées pour la compensation de forces latérales (Δ Y), étant amenées avec des signes de polarité différente directement aux circuits de régulation (a, b).

5. Agencement selon une des précédentes revendications,
caractérisé en ce
que les valeurs d'objectif supplémentaires (Δ M_{obj.} ou bien Δ U_{obj.}) engendrées du générateur de valeur d'objectif (11 ou bien 26) sont ainsi amenées avec des signes de polarité différente aux deux circuits de régulation (a, b), que des forces de conduites agissant à l'encontre des forces latérales ( Δ Y), avec des transmissions latérales, des roues (2', 2), surviennent dans les points de contact de roue.
